# EUROPEAN PATENT SPECIFICATION

(11) **EP 1 693 830 B1**
(45) Date of publication and mention of the grant of the patent: **20.12.2017**
(21) Application number: 05003672.2
(22) Date of filing: 21.02.2005
(51) Int. Cl.: G10L 15/26

(54) **Voice-controlled data system**
Sprachgesteuertes Datensystem
Système de données à commande vocale

(43) Date of publication of application: 23.08.2006
(73) Proprietor: Harman Becker Automotive Systems GmbH, 76307 Karlsbad (DE)
(72) Inventor: Hennecke, Marcus, Dr., 89075 Ulm (DE)
(74) Representative: Bertsch, Florian Oliver

(56) References cited:
- EP-A- 1 291 848
- EP-A- 1 300 829
- US-A1- 2004 039 570
- JEAN KUMAGAI: "Talk to the Machine" IEEE SPECTRUM, [Online] September 2002 (2002-09), pages 60-64, XP002337268 Retrieved from the Internet: URL:http://ieeexplore.ieee.org/iel5/6/2214 4/01030970.pdf> [retrieved on 2005-07-19]

## Description

This invention relates to a voice-controlled data system and to a method for a voice-controlled selection of a media file stored on a data storage unit.

### Related Art

Recently the use of media files which are available over a centralized data base usable for a variety of users has become very well known. The use of audio or video files which are accessible via a communication network, e.g. the internet, using wired or wireless connections has become a widely spread phenomenon due to the fact that systems have been developed which allow the storing of audio and video data files in a compact way using different compression techniques. Furthermore, electronic music stores, e.g. iTunes from Apple, provide databases comprising a large variety of different music files which can be bought and downloaded onto a personal data storage unit.

In the art, many different formats for storing these media data have been known, e.g. media data stored in a MP3 format, AAC format, WMA format, MOV format, and WMV format. Additionally, many formats also allow the storing of meta-data corresponding to the media file. These meta-data or meta-information comprise data, e.g. the title of the file, allowing the identification of the data, the artist, the year of record, the genre, the tracks, etc.

Additionally, the voice-controlled operation of multimedia systems is well known in the art. Especially in vehicles, the voice-controlled operation of electronic systems comprising an audio module, a navigation module, a telecommunication module, and/or a radio module, is a useful feature for the driver which helps the driver to focus on the traffic. To this end, speech recognition units are used in which a voice command from the user of the electronic system is detected and phonetic transcriptions of the detected voice command are used for executing the command of the user. The control of an electronic system comprising media files in order to select one of the files is a difficult task, since the speech recognition system has to recognize the speech input from the user, which may comprise variable vocabulary such as the name or the title of the media file. EP-A-1 300 829 discloses dynamically enrolling file identification data of media files in a speech recognition system, so that they are then included in the SR vocabulary and the user can select a media file by voice.

EP-A-1 291 848 discloses a mobile phone which dynamically enrolls name entries from its phone book into an SR vocabulary. The name entries have language IDs assigned, either automatically or manually by the user. The user can then access name entries in the phone book by voice.

### Summary of the Invention

As a consequence there is need to provide a possibility for improving a speech recognition unit which allows the selection of specific media files from a group of several media files.

This need is met by a voice-controlled data system and by a method for a voice-controlled selection of a media file as mentioned in the independent claims. In the dependent claims preferred embodiments of the invention are described.

According to a first embodiment of the invention, a voice-controlled data system is provided which comprises a data storage unit comprising media files having associated file identification data. Furthermore, a vocabulary generating unit is provided which generates phonetic data corresponding to the file identification data, the phonetic data being supplied to a speech recognition unit as a recognition vocabulary, whereas one of the media files is selected according to a recognized speech control command on the basis of the generated phonetic data. Additionally, the file identification data are contained in a header of a media file and comprise a language identification part for identifying the language of the file identification data, wherein the vocabulary generating unit generates the phonetic data for the file identification data of a media file based on its language identification part. The language identification part of the file identification data helps to find the correct pronunciation of the file identification data, the pronunciation being used in the speech recognition unit for identifying the voice command and for generating a speech control command. When the original language of the file identification data is known, it is easier to generate the correct phonetic data of the file identification data. The language identification parts helps to identify the language of the data comprised in the file identification data. The file identification data is often used by the user of the data system for selecting one of the media files. The user may wish to play one of the media files and will therefore use a voice command telling the system the name of the file or the artist of the file. The vocabulary generating unit which generates the phonetic data is then able to correctly generate the phonetic data when the origin of the file identification data is known.

Furthermore, the data system may comprise at least one language database comprising phonetic transcriptions of terms of a language and/ or phonetic rules of a language. When the vocabulary generating unit generates phonetic data, the language database comprising phonetic transcriptions may be used, and the correct language database may be selected in accordance with the language which was detected with the help of the language identification part of the file identification data.

According to a preferred embodiment of the invention, the system further comprises a language identification unit which extracts a language identification tag out of the language identification part for a media file. The language identification tag identifies the language of the corresponding file identification data, and abbreviations, e.g. DE for German, FR for French, etc may be used. One possibility of classifying the different languages by the language identification tag may be by using Norm ISO 639-2. In this ISO-norm the different languages are encoded by two or three characters. The language identification tag comprised in the file identification data helps to correctly determine the language which should be used for generating the phonetic data corresponding to the file identification data.

Preferably, the file identification data of the media file comprise at least one natural language term. In the present context, natural language term is used for a language which is used for communicating between human beings, and does not mean computer-programming language which is used to instruct computer systems. Preferably, the media files comprise audio or video files, and the file identification data comprise at least one of the following types of information: title of the file, composer or author of the file, artist of the file, and/or genre of the file, etc. When the user of the data system wants to select one of the media files, he or she will probably use the artist or composer or title of the media file in the case of an audio file. For example, the user may wish to select a media file on the data storage unit comprising files of Tina Turner or Edith Piaf. For a voice-controled operation the user probably uses the voice command "play Tina Turner" or "play Edith Piaf", possibly followed by the title of the respective media file. The speech recognition unit now has to recognize the input voice data. This is normally done by comparing the input voice data to phonetic data generated of the file identification data, i.e. of the title of the media file or of the artist of the media file. The language identification unit extracting the language identification tag helps to determine the correct pronunciation of the file identification data by using the language identification part for generating the phonetic data. The vocabulary generating unit generates the correct phonetic data of the media file, the phonetic data is then used by the speech recognition unit for determining the content of the voice command of the user of the system.

Instead of selecting one media file out of a group of media files it is also possible to select one chapter out of several chapters of one media file (e.g. to select one chapter of a DVD where the video file is composed of several chapters).

The system may, furthermore, comprise a language database selecting unit which selects a language database in accordance with the extracted language identification tag. The data system normally accesses databases comprising phonetic transcriptions and phonetic rules of a language. The language identification tag helps to select the correct language database. For the correct pronunciation of an English phrase, the English language database comprising phonetic transcriptions of English terms and /or comprising English phonetic rules is needed, for the correct pronunciation of a French or German term, a French or German database has to be used, etc.

For further supporting multilingual speech recognition, it is preferred to provide a multilingual speech recognition means, e.g. by providing a plurality of (parallel) speech recognition units operating in different languages, or by providing a multilingually trained speech recognition unit which is able to recognize words or phonemes from different languages. In the first case, the plurality of speech recognition units may be supplied with the corresponding phonetic data generated in the different languages. For instance, a speech recognition unit configured to recognize German may be supplied with the phonetic transcriptions for file identification data that is tagged for German, a French speech recognition unit receives the phonetic transcriptions for French file identification data, etc... On the other hand, a multilingually trained speech recognition unit may be supplied with all phonetic data for all file identification data irrespective of the individual language identification data. The multilingually trained speech recognition unit is preferably trained on speech data which includes data from all languages that are used in the data system. As an alternative, the different phonetics of the used languages may be mapped to the language of the speech recognition unit. In other words, the phonemes of phonetic transcriptions in foreign languages may be mapped to the native phonemes of the speech recognition unit in order to allow the single language speech recognition unit to recognize file identification data having phonetic transcriptions in a different language.

The database system of the invention may further comprise a media file player for playing the selected media file, which is operated based on the speech control command. When the user has input the speech control command, the language identification part of the file identification data are extracted, phonetic data are generated in the vocabulary generating unit by utilizing the fact that the language of the file identification data is known. The generated phonetic data are input into the speech recognition unit where they are compared to the voice data, and a speech control command is generated and fed to the player which selects the media file in accordance with the speech control command.

It is also possible to generate the phonetic data before the user has input the speech control command. Every time a new media file is present on the data storage unit, or every time the system is booted, the language identification part is extracted and the phonetic data are generated. When the user then selects a media file using the control command the already generated phonetic data can be used.

According to a preferred embodiment of the invention, the file identification data comprise data sets of different languages. The different data sets may be the title of the file, the composer, the author, the artist or the genre of the file. All this different data sets are not necessarily of the same language, e.g. the singer may have a French name, the title of the song may be German, Italian, Spanish, etc. Each of the data sets may be used by the user for selecting one of the media files, so that the correct pronunciation of the different data sets has to be known, i.e. the correct phonetic transcriptions of the different data sets have to be guaranteed. The title of the song may be French, e.g. "la Promesse", the singer Kate Ryan being an English pronounced name. For the generation of the correct phonetic data, the language of each data set has to be known, so that the correct phonetic data of the title, of the artist or of the author of the file can be generated.

The invention further relates to a multimedia system comprising a data system as mentioned above. The invention especially relates to a multimedia system incorporated in a vehicle dashboard. These multimedia systems normally comprise many electronic modules, e.g. an audio module, a video module, a telecommunication module, and/or a navigation module. Especially in vehicles, the voice-controlled operating of electronic systems is an important feature, since it helps the driver to concentrate on the traffic. The driver does not need to operate different operating buttons and can, therefore, concentrate on the traffic, when speech recognition systems are used in the multimedia system.

The invention further relates to a method for a voice-controlled selection of a media file stored on a data storage unit, the data storage unit comprising a plurality of media files which have respective file identification data. The method comprises the step of inputting voice data for selecting one of the media files and supplying the voice data to a speech recognition unit. Furthermore, a language identification part is extracted of the media files. For the recognition of the voice data in the speech recognition unit, phonetic data are generated corresponding to the file identification data based on the language information extracted from the language identification part. The generated phonetic data are then compared to the input voice data in the speech recognition unit and a corresponding speech control command is generated. Additionally, a media file is selected from the data storage unit in accordance with the generated speech control command. The language identification part in the file identification data helps to generate the correct phonetic data of the file identification data, so that the voice command or the voice data for selecting one of the media files can be more easily artisted by the speech recognition unit.

For determining the language of the file identification data, a language identification tag may be extracted from the language identification data. The extracted language identification tag is then used for generating the phonetic data.

By using the extracted language identification tag, the language of the file identification data is known. For generating correct phonetic data of the file identification data, a language database comprising phonetic transcriptions and/or comprising phonetic rules of a language is accessed for generating the phonetic data. Furthermore, the language database is selected in accordance with the extracted language identification tag. If the system works with different language recognition units, the language identification data helps to select the language recognition unit.

Furthermore, it is possible that the file identification data comprise data sets of different languages. As a consequence, the file identification data comprise corresponding language identification tags for each data set. For generating the phonetic data of the individual data sets, different language databases corresponding to the different language identification tags are accessed. E.g., the title of the file may be English, the artist of the file may be French, or vice versa.

Summarizing, phonetic data corresponding to file identification data of a media file is generated by applying phonetic rules of the language identified by the corresponding language identification part on natural language text stored in the file identification data. The conversion of the generated phonetic data to the speech control command is performed by pattern matching techniques applied in the speech recognition unit, e.g. dynamic time warping, dynamic programming, or statistical modelling techniques, e.g. hidden Markov Models. The voice data is compared to the phonetic data from the vocabulary generating unit and, as a result of the comparison, a speech control command is generated which is fed to a media player where the media file can be reproduced.

### Brief Description of the Drawings

In the following, specific embodiments of the invention will be described by way of example with respect to the accompanying drawings, in which
- Fig. 1: is a schematic view of a voice-controlled data system,
- Fig. 2: shows in detail part of the system of Fig. 1,
- Fig. 3: is a flowchart showing the different steps for a voice-controlled selection of a media file (according to an embodiment of the invention),
- Fig. 4: is a flowchart showing another embodiment for selecting a media file. and
- Fig. 5: is an example of a phonetic transcription.

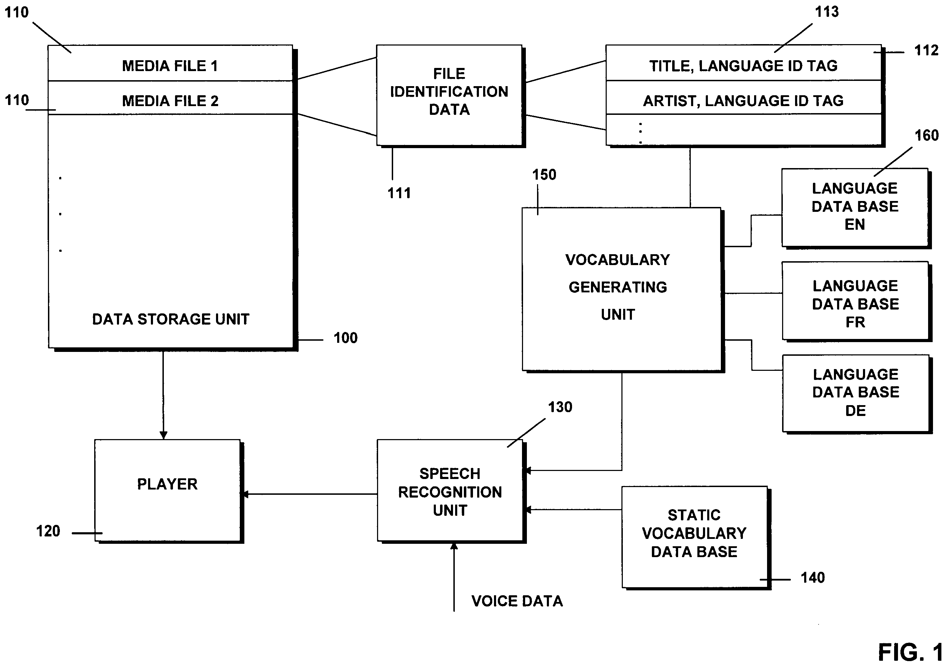

In Fig. 1 a voice-controlled data system is shown. The system comprises a data storage unit 100. The data storage unit 100 comprises different media files 110. The media file could comprise audio or video data and could be part of a compact disc or DVD or any other storage unit, e.g. a SD card, or any other storage medium for storing data. The storage unit could also comprise media files which were downloaded from an electronic music store, so that the media files 110 contained in the data storage unit would depend on the individual preferences of the user. In this case, the media files could be from different composers or authors, e.g. the data storage unit may have media files, e.g. songs from many different composers, and could also comprise titles of different genres, be it jazz, pop, classic, etc. The data storage unit could be incorporated into a vehicle (not shown), but could also be used in a non-mobile environment.

For the identification of the different media files, each media file has a corresponding file identification data 111. The structure of the file identification data may depend on the media files, i.e. on the way the media files are stored on a data storage unit. Different ways of storing media file data have been known. The file identification data 111 can be part of a header of the media files. The file identification data can be part of the media file, but they could also be stored in a separate file and they could be linked to the media files 110. If the media files are stored in the MP3 format, the file identification data are stored in the ID3 format. By way of example, the language identification data could be stored in the ID3v2 system, the ID3v2 system allowing to store file related data of MP3 data. In general, the composition of the file identification data will depend on the storing format of the data itself, be it MP3, AAC, WMA, MOV or WMV or any other format.

The file identification data of each media file comprise different data sets 112. These data sets help to recognize the media file and comprise information about the title of the file, the artist of the file, the genre of the file, the composer, the number of tracks, etc. Each data set 112 comprises a language identification tag 113 which indicates the language of the information comprised in the data set. In the example shown in Fig. 1 the title comprising natural language could be an English title (e.g. "Singing in the Rain"). In this case the language identification tag would show the information that the title is an English language title. Furthermore, the data set indicating the artist of a song of a media file could be a proper name. This name also comprises a language identification tag 113 which helps to correctly pronounce the name of the artist.

If a user of the data storage system wants to select one of the media files comprised in the data storage unit 100 he or she may use commands such as "play [name of the title]" or "play [name of artist]". The correct media file has to be transferred to a media player 120 which will play the selected media file in accordance with the input voice data input into a speech recognition unit 130. The speech recognition unit 130 has to correctly identify the voice command input by the user of the system. This voice command normally comprises an often used static vocabulary, e.g. commands like play, stop, go to, forward, backwards, etc. In order to correctly identify this vocabulary, the speech recognition unit may have access to a static vocabulary database 140 which helps to identify the static vocabulary and provides the corresponding phonetic transcriptions.

In contrast to the static vocabulary, the voice command also comprises variable vocabulary which depends on the content of the media file, e.g. the title of the media file, the artist of the file etc. The speech recognition unit 130 has to recognize the static vocabulary and the variable vocabulary in order to generate the correct speech control command input into the player. To this end, a vocabulary generating unit 150 generates a phonetic transcription of the file identification data 111 of the media files 110. For the correct phonetic transcription of the different data sets comprised in the file identification data, the language identification tags 113 are used. E.g., the title of the song may be "La Promesse". In this case the language identification tag indicates that the title is French. The vocabulary generating unit 150 then knows how to generate the phonetic transcription of the title. The singer of this title, Kate Ryan, has an English pronounced name, so that the language identification tag in this case will identify the artist as having an English pronounced name. For generating the phonetic transcription of the different file identification data, the vocabulary generating unit may access different databases 160, these databases comprising phonetic transcriptions of terms of a certain language and/or phonetic rules of said language. In the embodiment shown, three different language databases 160 are shown, an English language database, a French language database, and a German language database. For the phonetic transcription, the vocabulary generating unit may use a computer readable phonetic alphabet such as SAMPA or IPA, which are known in the art.

As can be seen in Fig. 1, the language identification tag 113 helps to identify the language of the different datasets 112 of the file identification data, so that the vocabulary generating unit 150 generates the correct phonetic transcription of the information comprised in the file identification data. The phonetic transcription generated by unit 150 is fed to the speech recognition unit which uses known speech recognition techniques in order to correctly identify the voice data or voice command input by the user of the system. The language identification tag helps to create the correct vocabulary which strongly depends on the media file comprised in the data storage unit 100.

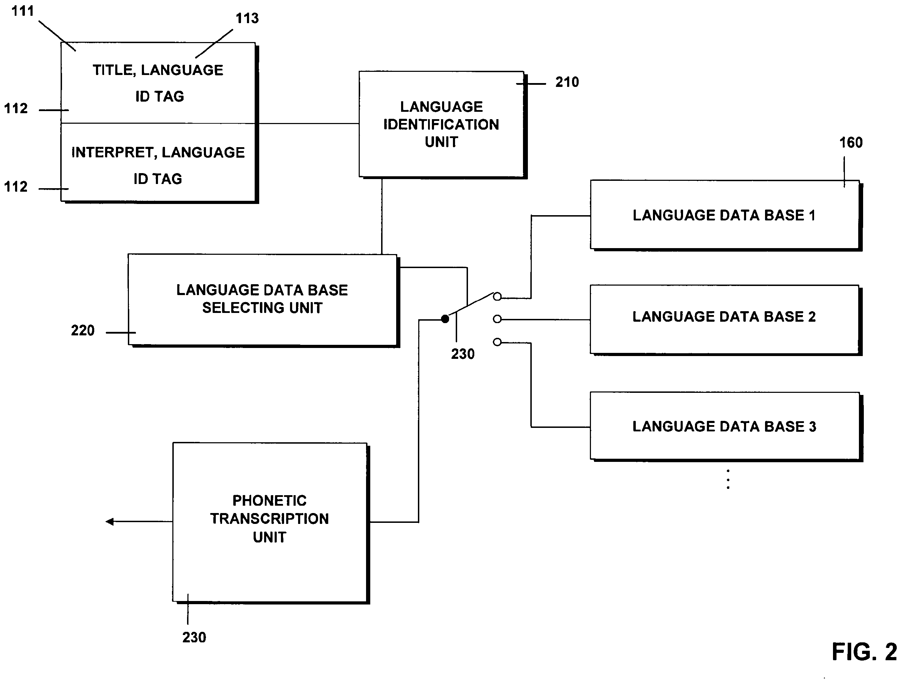

In Fig. 2 the functioning of the vocabulary generating unit 150 is shown in further detail. A language identification unit 210 extracts the language identification tag out of the set 112 and transmits the language identification tag to the language database selecting unit 220. The language database selection unit 220 selects one of the databases 160 in accordance with the language identification tag 113 extracted from the file identification data 111. The language database selection unit 220 controls a switching unit 230 and selects the database comprising phonetic rules and/or a phonetic transcription of different terms of the language identified by the language identification unit 210.

A phonetic transcription unit 230 produces the phonetic data of the information comprised in the file identification data, i.e. of the title of the artist, etc.

The phonetic transcription unit 230 transfers the generated phonetic data to the speech recognition unit 130 of Fig. 1, which then uses known recognition techniques, such as dynamic time warping, dynamic programming, statistical modeling technique, such a hidden Markov models. The functioning of speech recognition units is well known in the art and, for the sake of clarity, a detailed description thereof is omitted, as it does not help for the understanding of the present invention.

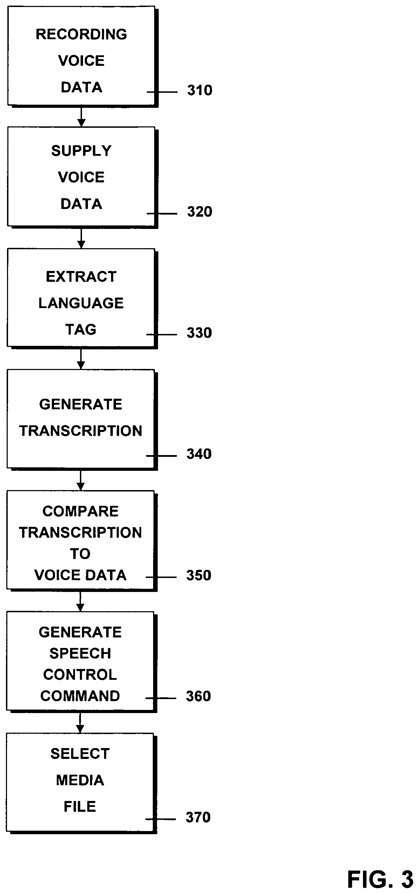

In Fig. 3 the different steps for the voice-controlled selection of a media file are shown. In a first step 310 the voice data of the user of the system comprising the voice command are recorded. In a next step 320 the voice data are supplied to the speech recognition unit 130. Additionally, the language identification tag 113 is extracted from the file identification data, in step 330. Now the language of the terms comprised in the file identification data is known, so that the phonetic transcriptions can be generated in step 340. In step 350 the phonetic transcription generated in step 340 is compared to the voice data in step 350. The speech recognition unit then generates a speech control command for the media player 120 by using speech recognition techniques known in the art (step 360). In step 370 the media file is selected in correspondence with the generated speech control command. The language identification data, i.e. the language identification tag helps to produce the correct phonetic transcription of the natural language term(s) comprised in the file identification data 111, so that the correct phonetic transcriptions can be obtained. As a consequence, the voice-controlled handling of a selection of a media file can be improved. Apparently, the step 330 and 340 for generating the correct phonetic transcriptions may also be performed before the voice data is input in steps 310 and 320. The recognition vocabulary may be prepared in advance and stored until the system is used by inputting a voice command.

The invention is not limited to the selection of one media file. It should be understood that at least one media file can be selected. In the case the user inputs the command "play [name of the artist]", the system can also select all files of said artist.

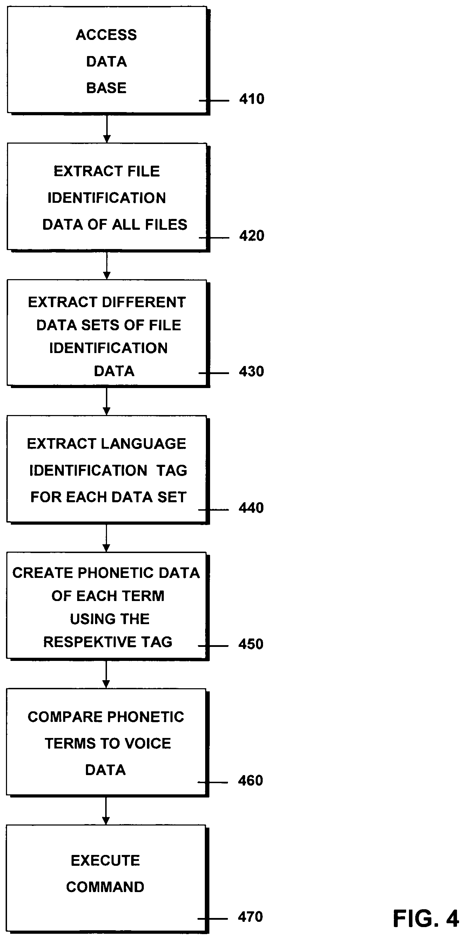

In Fig. 4 another embodiment is shown. In a first step a database is accessed, the database comprising a data storage unit as shown in Fig. 1. In a next step 420 the file identification data of all files comprised in the database are extracted. The file identification information comprised in the file identification data has to be known, so that the different sets of each file identification data are extracted (step 430). For the correct phonetic transcription of the different terms of the data sets 112, the language identification tags are extracted for each data set (step 440). In a next step the phonetic data of each term of the data set is created by using the respective language identification tags (step 450). As it was already mentioned above, the language of each data set is not necessarily the same (cf. above the song "La Promesse" of Kate Ryan). The user will probably know the pronunciation of the file identification data, the pronunciation depending on the language. To this end, the language of the information comprised in the file identification data has to be known. After phonetic transcriptions have been made, they are compared to the voice data input into the system (step 460), and the input voice control command can be executed (step 470).

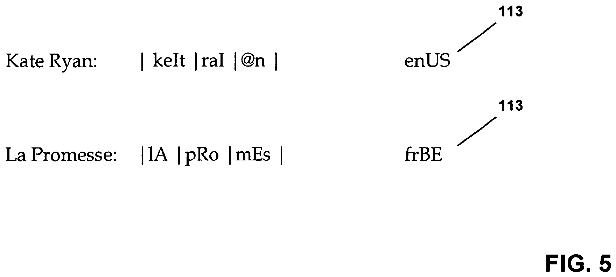

Fig. 5 shows a phonetic transcription of the name Kate Ryan and of the title of her song "La Promesse" in SAMPA.

Additionally the language identification tags 113 are shown. In the example shown "enUS" indicates that the singer has an English name (en), and "frBE" indicates that the Title is French (fr). Using the tags 113 the correct phonetic transcription can be obtained.

In conclusion, the present invention helps to provide a speech control system which uses the information of the language identification data for the correct generation of the voice control command which is fed to the media player which selects the media file in correspondence with the input voice data.

## Claims

1. Voice-controlled data system comprising
- a data storage unit (100) comprising media files (110) having associated file identification data (111),
- a vocabulary generating unit (150) for generating phonetic data corresponding to the file identification data, the phonetic data being supplied to a speech recognition unit (130) as a recognition vocabulary, whereas one of the media files is selected according to a recognized speech control command on the basis of the generated phonetic data,
wherein the file identification data (111) are contained in a header of a media file and comprise a language identification part for identifying the language of the file identification data, and wherein the vocabulary generating unit (150) is for generating the phonetic data for the file identification data of a media file based on its language identification part.

2. Data system according to claim 1, **characterized by** further comprising at least one language database (160) comprising phonetic transcriptions of terms of a language and/or phonetic rules of a language.

3. Data system according to claim 1 or 2, **characterized by** further comprising a language identification unit (210) for extracting a language identification tag (113) out of the language identification part for a media file.

4. Data system according to any of the preceding claims, **characterized in that** the file identification data (111) of a media file comprise at least one natural language term.

5. Data system according to any of the preceding claims, wherein the media files comprise audio or video files, the file identification data comprising at least one of the following information: title of the file, composer or author of the file, artist of the file, and/or genre of the file.

6. Data system according to any of claims 3 to 5, **characterized by** further comprising a language database selecting unit (220) for selecting a language database in accordance with the extracted language identification tag.

7. Data system according to any of the preceding claims, **characterized by** further comprising a media file player (120) for playing the selected media file, which is operated based on the speech control command.

8. Data system according to any of the preceding claims, wherein the file identification data (111) comprise data sets (112) of different languages.

9. Multimedia system comprising a data system as mentioned in the preceding claims.

10. Method for the voice-controlled selection of a media file stored on a data storage unit (100), the data storage unit comprising a plurality of media files which have respective file identification data (111) contained in a header of a media file, comprising the following steps:
- inputting voice data for selecting one of the media files and supplying the voice data to a speech recognition unit (150),
- extracting a language identification part comprised in the file identification data of the media files,
- generating phonetic data corresponding to the file identification data based on the language information extracted from the language identification part,
- comparing the generated phonetic data to the input voice data by the speech recognition unit and generating a corresponding speech control command, and
- selecting a media file from the data storage unit in accordance with the generated speech control command.

11. Method according to claim 10, wherein a language identification tag (113) is extracted from the language identification data, the extracted language identification tag being used for generating the phonetic data.

12. Method according to claim 11, wherein at least one language database (160) comprising phonetic transcriptions and/or phonetic rules of a language is accessed for generating the phonetic data, wherein the language database is selected in accordance with the language identification tag.

13. Method according to any of claims 10 to 13, wherein the file identification data comprise the author and/or the title of an audio or video file, the phonetic data being generated from the author and/or the title.

14. Method according to any of claims 10 to 13, wherein the selected media file is transferred to a media file player (120) where it is reproduced.

15. Method according to any of claims 10 to 14, wherein the file identification data comprise data sets of different languages and corresponding different language identification tags (113), so that different language databases are accessed for generating the phonetic data of the individual data sets.

16. Method according to any of claims 10 to 15, wherein phonetic data corresponding to a file identification data of a media file is generated by applying phonetic rules of the language identified by the corresponding language identification part on natural language text stored in the file identification data.

17. Method according to any of claims 10 to 16, wherein the conversion of the generated phonetic data to the speech control command is performed by pattern matching techniques applied in the speech recognition unit, such as dynamic time warping, dynamic programming, or statistical modelling techniques, such as hidden Markov Models.

## Patentansprüche

1. Sprachgesteuertes Datensystem, umfassend:
- eine Datenspeichereinheit (100), die Mediendateien (110) umfasst, die zugeordnete Datei-Identifizierungsdaten (111) aufweisen,
- eine Vokabelerstellungseinheit (150) zum Erstellen phonetischer Daten entsprechend der Datei-Identifizierungsdaten, wobei die phonetischen Daten als Erkennungsvokabular in eine Spracherkennungseinheit (130) eingespeist werden, wobei eine der Mediendateien gemäß eines erkannten Sprachsteuerbefehls auf Grundlage der erstellten phonetischen Daten ausgewählt wird,
wobei die Datei-Identifizierungsdaten (111) im Kopf einer Mediendatei enthalten sind und einen Sprachidentifizierungsteil zum Identifizieren der Sprache der Datei-Identifizierungsdaten umfassen und wobei die Vokabelerstellungseinheit (150) zum Erstellen der phonetischen Daten für die Datei-Identifizierungsdaten einer Mediendatei auf Grundlage ihres Sprachidentifizierungsteils dient.

2. Datensystem nach Anspruch 1, **dadurch gekennzeichnet, dass** es ferner mindestens eine Sprachdatenbank (160) umfasst, die phonetische Transkriptionen von Termini einer Sprache und/oder phonetische Regeln einer Sprache umfasst.

3. Datensystem nach Anspruch 1 oder 2, **dadurch gekennzeichnet, dass** es ferner eine Sprachidentifizierungseinheit (210) zum Extrahieren einer Sprachidentifizierungskennzeichnung (113) aus dem Sprachidentifizierungsteil für eine Mediendatei umfasst.

4. Datensystem nach einem der vorhergehenden Ansprüche, **dadurch gekennzeichnet, dass** die Datei-Identifizierungsdaten (111) einer Mediendatei mindestens einen Terminus einer natürlichen Sprache umfassen.

5. Datensystem nach einem der vorhergehenden Ansprüche, wobei die Mediendateien Audio- oder Videodateien umfassen, wobei die Datei-Identifizierungsdaten mindestens eine der folgenden Informationen umfassen: Name der Datei, Komponist oder Autor der Datei, Künstler der Datei und/oder Genre der Datei.

6. Datensystem nach einem der Ansprüche 3 bis 5, **dadurch gekennzeichnet, dass** es ferner eine Sprachdatenbankauswähleinheit (220) zum Auswählen einer Sprachdatenbank in Übereinstimmung mit der extrahierten Sprachidentifizierungskennzeichnung umfasst.

7. Datensystem nach einem der vorhergehenden Ansprüche, **dadurch gekennzeichnet, dass** es ferner ein Mediendateiabspielgerät (120) zum Abspielen der ausgewählten Mediendatei umfasst, das auf Grundlage des Sprachsteuerbefehls betrieben wird.

8. Datensystem nach einem der vorhergehenden Ansprüche, wobei die Datei-Identifizierungsdaten (111) Datensätze (112) unterschiedlicher Sprachen umfassen.

9. Multimediasystem, umfassend ein Datensystem nach einem der vorhergehenden Ansprüche.

10. Verfahren zum sprachgesteuerten Auswählen einer Mediendatei, die in einer Datenspeichereinheit (100) gespeichert ist, wobei die Datenspeichereinheit eine Vielzahl von Mediendateien umfasst, die entsprechende im Kopf einer Mediendatei enthaltene Datei-Identifizierungsdaten (111) aufweisen, wobei das Verfahren die folgenden Schritte umfasst:
- Eingeben von Sprachdaten zum Auswählen einer der Mediendateien und Einspeisen der Sprachdaten in eine Spracherkennungseinheit (150),
- Extrahieren eines Sprachidentifizierungsteils, der in den Datei-Identifizierungsdaten der Mediendateien enthalten ist,
- Erstellen phonetischer Daten entsprechend der Datei-Identifizierungsdaten auf Grundlage der Sprachinformationen, die aus dem Sprachidentifizierungsteil extrahiert wurden,
- Vergleichen der erstellten phonetischen Daten mit den eingegebenen Sprachdaten mithilfe der Spracherkennungseinheit und Erstellen eines entsprechenden Sprachsteuerbefehls und
- Auswählen einer Mediendatei aus der Datenspeichereinheit in Übereinstimmung mit dem erstellten Sprachsteuerbefehl.

11. Verfahren nach Anspruch 10, wobei eine Sprachidentifizierungskennzeichnung (113) aus den Sprachidentifizierungsdaten extrahiert wird, wobei die extrahierte Sprachidentifizierungskennzeichnung zum Erstellen der phonetischen Daten verwendet wird.

12. Verfahren nach Anspruch 11, wobei zum Erstellen der phonetischen Daten auf mindestens eine Sprachdatenbank (160), die phonetische Transkriptionen und/oder phonetische Regeln einer Sprache umfasst, zugegriffen wird, wobei die Sprachdatenbank in Übereinstimmung mit der Sprachidentifizierungskennzeichnung ausgewählt wird.

13. Verfahren nach einem der Ansprüche 10 bis 13, wobei die Datei-Identifizierungsdaten den Autor und/oder den Namen einer Audio- oder Videodatei umfassen, wobei die phonetischen Daten von dem Autor und/oder dem Namen erstellt werden.

14. Verfahren nach einem der Ansprüche 10 bis 13, wobei die ausgewählte Mediendatei an ein Mediendateiabspielgerät (120) übertragen wird, wo sie wiedergegeben wird.

15. Verfahren nach einem der Ansprüche 10 bis 14, wobei die Datei-Identifizierungsdaten Datensätze unterschiedlicher Sprachen und entsprechende unterschiedliche Sprachidentifizierungskennzeichnungen (113) umfassen, sodass zum Erstellen der phonetischen Daten der individuellen Datensätze auf unterschiedliche Sprachdatenbanken zugegriffen wird.

16. Verfahren nach einem der Ansprüche 10 bis 15, wobei durch Anwenden phonetischer Regeln der Sprache, die von dem entsprechenden Sprachidentifizierungsteil eines natürlichsprachigen Textes, der in den Datei-Identifizierungsdaten gespeichert ist, identifiziert wurden, phonetische Daten entsprechend der Datei-Identifizierungsdaten einer Mediendatei erstellt werden.

17. Verfahren nach einem der Ansprüche 10 bis 16, wobei die Umwandlung der erstellten phonetischen Daten in den Sprachsteuerbefehl mithilfe von in der Spracherkennungseinheit angewendeten Musterabgleichungstechniken, wie etwa dynamische Zeitnormierung, dynamische Programmierung oder statistische Modellierungstechniken, wie etwa versteckten Markov-Modellen erfolgt.

## Revendications

1. Système de données à commande vocale comprenant
- une unité de stockage de données (100) comprenant des fichiers multimédias (110) ayant des données d'identification de fichier associées (111),
- une unité de génération de vocabulaire (150) pour générer des données phonétiques correspondant aux données d'identification de fichier, les données phonétiques étant fournies à une unité de reconnaissance vocale (130) comme un vocabulaire de reconnaissance, alors qu'un des fichiers multimédias est sélectionné en fonction d'une commande de contrôle vocale reconnue sur la base des données phonétiques générées,
dans lequel les données d'identification de fichier (111) sont contenues dans une en-tête d'un fichier multimédia et comprennent une partie d'identification de langue pour identifier la langue des données d'identification de fichier et dans lequel l'unité de génération de vocabulaire (150) est adaptée pour générer les données phonétiques pour les données d'identification de fichier d'un fichier multimédia sur la base de sa partie d'identification de langue.

2. Système de données selon la revendication 1, **caractérisé en ce qu'**il comprend en outre au moins une base de données de langue (160) comprenant des transcriptions phonétiques de termes d'une langue et/ou des règles phonétiques d'une langue.

3. Système de données selon la revendication 1 ou 2, **caractérisé en ce qu'**il comprend en outre une unité d'identification de langue (210) pour extraire une étiquette d'identification de langue (113) de la partie d'identification de langue pour un fichier multimédia.

4. Système de données selon l'une quelconque des revendications précédentes, **caractérisé en ce que** les données d'identification de fichier (111) d'un fichier multimédia comprennent au moins un terme de langage naturel.

5. Système de données selon l'une quelconque des revendications précédentes, dans lequel les fichiers multimédias comprennent des fichiers audio ou vidéo, les données d'identification de fichier comprenant au moins une des informations suivantes : le titre du fichier, le compositeur ou l'auteur du fichier, l'artiste du fichier et/ou le genre du fichier.

6. Système selon l'une quelconque des revendications 3 à 5, **caractérisé en ce qu'**il comprend en outre une unité de sélection de base de données de langue (220) pour sélectionner une base de données de langue en fonction de l'étiquette d'identification de langue extraite.

7. Système de données selon l'une quelconque des revendications précédentes, **caractérisé en ce qu'**il comprend en outre un lecteur de fichiers multimédias (120) pour lire le fichier multimédia sélectionné, qui est actionné sur la base de la commande de contrôle vocale.

8. Système de données selon l'une quelconque des revendications précédentes, dans lequel les données d'identification de fichier (111) comprennent des ensembles de données (112) de différentes langues.

9. Système multimédia comprenant un système de données tel que mentionné dans les revendications précédentes.

10. Procédé pour la sélection à commande vocale d'un fichier multimédia stocké sur une unité de stockage de données (100), l'unité de stockage de données comprend une pluralité de fichiers multimédias qui ont des données d'identification de fichier respectives (111) contenues dans une en-tête d'un fichier multimédia, comprenant les étapes suivantes :
- l'entrée de données vocales pour sélectionner un des fichiers multimédias et la fourniture des données vocales à une unité de reconnaissance vocale (150),
- l'extraction d'une partie d'identification de langue comprise dans les données d'identification de fichier des fichiers multimédias,
- la génération de données phonétiques correspondant aux données d'identification de fichier sur la base des informations de langue extraites de la partie d'identification de langue,
- la comparaison des données phonétiques générées aux données vocales d'entrée par l'unité de reconnaissance vocale et la génération d'une commande de contrôle vocale correspondante, et
- la sélection d'un fichier multimédia à partir de l'unité de stockage de données en fonction de la commande de contrôle vocale générée.

11. Procédé selon la revendication 10, dans lequel une étiquette d'identification de langue (113) est extraite des données d'identification de langue, l'étiquette d'identification de langue extraite étant utilisée pour générer les données phonétiques.

12. Procédé selon la revendication 11, dans lequel au moins une base de données de langue (160) comprenant des transcriptions phonétiques et/ou des règles phonétiques d'une langue est consultée pour générer les données phonétiques, dans lequel la base de données de langue est sélectionnée en fonction de l'étiquette d'identification de langue.

13. Procédé selon l'une quelconque des revendications 10 à 13, dans lequel les données d'identification de fichier comprennent l'auteur et/ou le titre d'un fichier audio ou vidéo, les données phonétiques étant générées à partir de l'auteur et/ou du titre.

14. Procédé selon l'une quelconque des revendications 10 à 13, dans lequel le fichier multimédia sélectionné est transféré à un lecteur de fichiers multimédias (120) où il est reproduit.

15. Procédé selon l'une quelconque des revendications 10 à 14, dans lequel les données d'identification de fichier comprennent des ensembles de données de différentes langues et des étiquettes d'identification de langue différentes correspondantes (113), de manière que des bases de données différentes soient consultées pour générer les données phonétiques des ensembles de données individuels.

16. Procédé selon l'une quelconque des revendications 10 à 15, dans lequel des données phonétiques correspondant à une donnée d'identification de fichier d'un fichier multimédia sont générées en appliquant des règles phonétiques de la langue identifiée par la partie d'identification de langue correspondante sur un texte de langage naturel stocké dans les données d'identification de fichier.

17. Procédé selon l'une quelconque des revendications 10 à 16, dans lequel la conversion des données phonétiques générées en la commande de contrôle vocale est effectuée par des techniques d'adaptation de modèle appliquées dans l'unité de reconnaissance vocale, telles que la déformation temporelle dynamique, la programmation dynamique, ou des techniques de modélisation statistique, telles que des modèles cachés de Markov.
